# EUROPÄISCHE PATENTSCHRIFT

(11) **EP 4 081 761 B1**
(45) Veröffentlichungstag und Bekanntmachung des Hinweises auf die Patenterteilung: **03.07.2024**
(21) Anmeldenummer: 20817294.0
(22) Anmeldetag: 01.12.2020
(51) Int. Cl.: G01F 1/74, G01F 1/84, G01F 1/34

(54) **VERFAHREN ZUM ÜBERWACHEN EINES DURCHFLUSSES EINES MEDIUMS MITTELS EINES CORIOLIS-MASSEDURCHFLUSSMESSGERÄTS, UND EINES DIFFERENZDRUCKMESSGERÄTS**
METHOD FOR MONITORING A FLOW OF A MEDIUM BY MEANS OF A CORIOLIS MASS FLOWMETER AND A DIFFERENTIAL PRESSURE MEASUREMENT DEVICE
PROCÉDÉ DE SURVEILLANCE D'UN DÉBIT D'UN MILIEU AU MOYEN D'UN DÉBITMÈTRE MASSIQUE À EFFET CORIOLIS ET D'UN APPAREIL DE MESURE DE PRESSION DIFFÉRENTIELLE

(30) Priorität: 29.12.2019 DE 102019009021
(43) Veröffentlichungstag der Anmeldung: 02.11.2022
(73) Patentinhaber: Endress + Hauser Flowtec AG, 4153 Reinach (CH)
(72) Erfinder: ZHU, Hao, 85354 Freising (DE); HUBENSTEINER, Josef, 85354 Freising (DE)
(74) Vertreter: Hahn, Christian
(86) Internationale Anmeldenummer: PCT/EP2020/084100
(87) Internationale Veröffentlichungsnummer: WO 2021/136625

(56) Entgegenhaltungen:
- WO-A1-2018/001635
- WO-A2-2019/086188
- DE-A1-102004 035 971
- GB-A- 2 572 836
- US-A1- 2007 084 298
- US-A1- 2008 257 066
- US-A1- 2010 280 757
- US-A1- 2012 192 658
- US-A1- 2015 160 056
- US-B2- 10 480 977

## Beschreibung

Die vorliegende Erfindung betrifft ein Verfahren zum Überwachen eines Durchflusses eines Mediums, welches zumindest eine flüssige Phase aufweist, mittels eines Coriolis-Massedurchflussmessgeräts mit gebogenen Messrohren, und eines Differenzdruckmessgeräts welches dazu eingerichtet ist eine Druckdifferenz zwischen einem ersten Druckmesspunkt und einem zweiten Druckmesspunkt an einer Rohrleitung zu ermitteln, wobei das Coriolis-Massedurchflussmessgerät zwischen dem ersten Druckmesspunkt und dem zweiten Druckmesspunkt in der Rohrleitung angeordnet ist wobei das Coriolis-Massedurchflussmessgerät als Wirkdruckgeber dient, wobei der erste Druckmesspunkt zwischen einer Druckquelle und dem Coriolis-Massedurchflussmessgerät angeordnet ist, wobei der zweite Druckmesspunkt zwischen dem Coriolis-Massedurchflussmessgerät und einer Drucksenke angeordnet ist. Bei den beschriebenen Messanordnungen kann es vorkommen, dass der Massestrom zum Stillstand kommt, wenn die Bögen der Messrohre asymmetrisch mit einem flüssigen Medium gefüllt sind, wobei ein Gasdruck in der Rohrleitung diese asymmetrische Füllung stabilisiert. Dies führt zu einer Druckdifferenz an den beiden Druckmesspunkten aufgrund der asymmetrischen Flüssigkeitssäule in den Rohrbögen. Diese Druckdifferenz täuscht einen Durchfluss vor, obwohl das Medium tatsächlich stillsteht.

Es ist daher bekannt, eine gedrosselte Bypass-Kapillarleitung zwischen den beiden Druckmesspunkten parallel zur Rohrleitung anzuschließen, die bei stillstehendem Medium in nützlicher Frist zu einem Druckausgleich zwischen beiden Druckmesspunkten führen soll. Dies funktioniert im Prinzip, ist aber sehr wartungsaufwendig, da eine Kapillarleitung leicht verstopfen kann. Außerdem wird in einem Betriebsmodus, in dem die Durchflussmessung durch das Coriolis-Massedurchflussmessgerät erfolgt, der Durchfluss durch die Kapillarleitung nicht vom Coriolis-Massedurchflussmessgerät erfasst. Dies führt zu Messfehlern.

Die noch unveröffentlichten Patentanmeldung DE 102019125682.8 offenbart einen anderen Ansatz, bei dem eine Medieneigenschaft wie Dichte oder Schallgeschwindigkeit an zwei Messpunkten vor und hinter dem Coriolis-Massedurchflussmessgerät verglichen werden. Bei Übereinstimmung ist eine Druckdifferenz eher als durch den Durchfluss bedingt zu bewerten. Bei andauernden signifikanten Abweichungen ist davon auszugehen, dass das Medium stillsteht und der Druckunterschied durch eine hydrostatische Säule bedingt ist. Dieser Ansatz funktioniert zuverlässig, ist aber mit den Mehrkosten zweier Sensoren erkauft. GB 2 572 836 A offenbart ein Verfahren zum Überwachen eines Durchflusses eines Mediums, welches zumindest eine flüssige Phase aufweist, mittels eines Coriolis-Massedurchflussmessgeräts, und eines Differenzdruckmessgeräts welches dazu eingerichtet ist eine Druckdifferenz zwischen einem ersten Druckmesspunkt und einem zweiten Druckmesspunkt an einer Rohrleitung zu ermitteln, wobei das Coriolis-Massedurchflussmessgerät als Wirkdruckgeber dient.

Es ist daher die Aufgabe der vorliegenden Erfindung ein Verfahren bereitzustellen, welches eine zuverlässige Unterscheidung zwischen stehendem und fließendem Medium mit geringerem Aufwand ermöglicht. Die Aufgabe wird erfindungsgemäß gelöst durch das Verfahren gemäß Anspruch1.

Das erfindungsgemäß Verfahren dient zum Überwachen eines Durchflusses eines Mediums, welches zumindest eine flüssige Phase aufweist, mittels eines Coriolis-Massedurchflussmessgeräts, und eines Differenzdruckmessgeräts welches dazu eingerichtet ist eine Druckdifferenz zwischen einem ersten Druckmesspunkt und einem zweiten Druckmesspunkt an einer Rohrleitung zu ermitteln, wobei das Coriolis-Massedurchflussmessgerät zwischen dem ersten Druckmesspunkt und dem zweiten Druckmesspunkt in der Rohrleitung angeordnet ist wobei das Coriolis-Massedurchflussmessgerät als Wirkdruckgeber dient, wobei der erste Druckmesspunkt zwischen einer Druckquelle und dem Coriolis-Massedurchflussmessgerät angeordnet ist, wobei der zweite Druckmesspunkt zwischen dem Coriolis-Massedurchflussmessgerät und einer Drucksenke angeordnet ist; wobei das Coriolis-Massedurchflussmessgerät mindestens zwei Oszillatoren mit jeweils mindestens einem gebogenen Messrohr aufweist, wobei die gebogenen Messrohre jeweils einen Scheitelpunkt aufweisen, der bezogen auf ein lokales Schwerefeld am tiefsten Punkt des Messrohrs angeordnet ist, wobei die Messrohre der Oszillatoren zwischen zwei Sammlern angeordnet sind, durch welche die strömungstechnisch parallel geschaltet sind, wobei ein erster Scheitelpunkt eines Messrohrs eines ersten Oszillators oberhalb eines zweiten Scheitelpunkts eines Messrohrs eines zweiten Oszillators angeordnet ist, wobei das Verfahren die folgenden Schritte umfasst: Erfassen einer Druckdifferenz zwischen dem ersten Druckmesspunkt und dem zweiten Druckmesspunkt; Erfassen eines ersten Dichtemesswerts auf Basis mindestens einer ersten Schwingungsfrequenz des ersten Oszillators; Erfassen eines zweiten Dichtemesswerts auf Basis mindestens einer zweiten Schwingungsfrequenz des zweiten Oszillators; und Ermitteln eines Durchflussmesswerts auf Basis der Druckdifferenz, wenn eine Differenz zwischen dem ersten Dichtemesswert und dem zweiten Dichtemesswert kleiner als ein Dichtedifferenzgrenzwert ist.

In einer Weiterbildung der Erfindung umfasst der Dichtedifferenzgrenzwert eine Funktion einer Dichte des Mediums.

In einer Weiterbildung der Erfindung umfasst der Dichtedifferenzgrenzwert eine Funktion einer Gasbeladung des Mediums.

In einer Weiterbildung der Erfindung wird die Gasbeladung anhand von Dichtefluktuationen, und/oder der Dämpfung der Messrohrschwingungen bzw. der Fluktuation der Dämpfung detektiert wird.

In einer Weiterbildung der Erfindung weisen das erste Messrohr und das zweite Messrohr jeweils eine Messrohrmittenlinie auf, wobei der Dichtedifferenzgrenzwert eine Funktion des vertikalen Abstands der Messrohrmittenlinien am Scheitelpunkt der Messrohre ist.

In einer Weiterbildung der Erfindung erfolgt das Ermitteln eines Durchflussmesswerts auf Basis der Druckdifferenz eine Überprüfung umfasst, ob die Druckdifferenz einen Schwellwert überschreitet, wobei unterhalb des Schwellwerts ein Durchfluss von Null angenommen wird.

In einer Weiterbildung der Erfindung beträgt der Schwellwert nicht mehr als 30 mbar, insbesondere nicht mehr als 25 mbar.

In einer Weiterbildung der Erfindung ist zwischen dem zweiten Druckmesspunkt und der Drucksenke ein Ventil angeordnet.

Die Erfindung wird nun anhand der in den Zeichnungen dargestellten Ausführungsbeispiele erläutert. Es zeigt:
Fig. 1: Einen Längsschnitt durch ein Coriolis-Massedurchflussmessgerät bei Stillstand des Mediums;
Fig. 2: Ein Diagramm zur Beschreibung der Beziehung zwischen Dichtemesswerten und der Druckdifferenz an den Messpunkten;
Fig. 3: Ein Diagramm zur Beschreibung der Beziehung zwischen scheinbaren Dichtemesswerten und einer Differenz in der Dämpfung der Messrohrschwingungen;
Fig. 4: Ein Flussdiagramm eines Ausführungsbeispiels des erfindungsgemäßen Verfahrens.

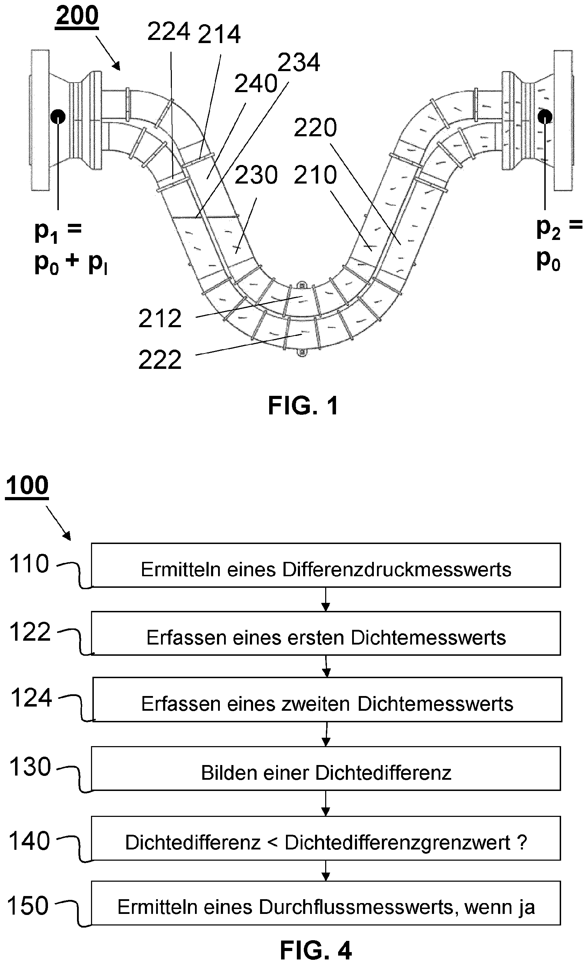

Anhand von Fig. 1 wird das Problem erläutert, welches der vorliegenden Erfindung zugrunde liegt. Wenn ein Flüssigkeitsstrom durch ein Coriolis-Massedurchflussmessgerät 200 zu einem ungünstigen Zeitpunkt angehalten wird, kann es zu nur teilweise mit Flüssigkeit 230 gefüllten gebogenen Messrohrbögen 210, 220 kommen, wobei die Flüssigkeit mit Gas 240 unter einem einlassseitigen Druck pi, welcher die Summe aus einem Basisdruck p₀ und dem hydrostatischen Druck pₗ der verschobenen Flüssigkeitssäule ist, gehalten wird. Ein auslassseitiger Druck p₂ ist dagegen im Wesentlichen mit dem Basisdruck p₀ identisch. Insofern als das Coriolis-Massedurchflussmessgerät 200 als Wirkdruckgeber zwischen zwei Messpunkten bei für den einlassseitigen Druck und den auslassseitigen Druck dient, um auf Basis der Druckdifferenz einen zwischen den Beiden Messpunkten eine Durchflussrate zu bestimmen, führt der hydrostatischen Druck pₗ der Verschobenen Flüssigkeitssäule zu einem scheinbaren Durchfluss. Die vorliegende Erfindung hat die Aufgabe diesen scheinbaren Durchfluss, von einem tatsächlichen Durchfluss zu unterscheiden.

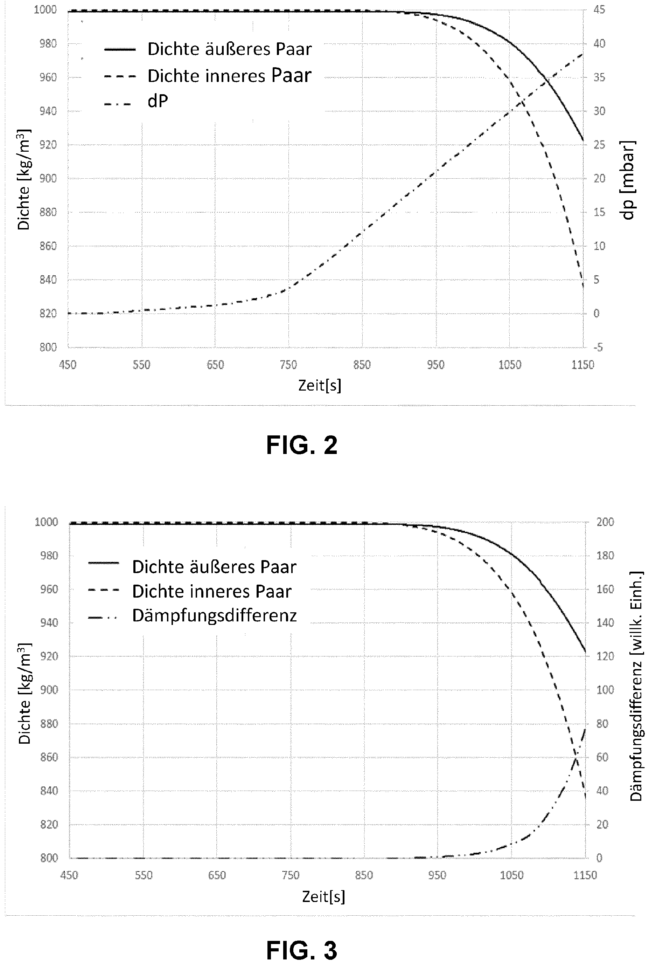

Hierzu nutzt die vorliegende Erfindung zumindest teilweise die in Fign.2 und 3 dargestellten Zusammenhänge, wobei hier ausgenutzt wird, dass es sich um ein Coriolis-Massedurchflussmessgerät 200 mit vier gebogenen Messrohren handelt, die in zwei Paaren jeweils parallel geführter gleichartiger Messrohre 210, 220 angeordnet sind, wobei die Scheitelpunkte 212, 222 der Mesrohre jeweils eines Messrohrpaares auf gleicher Höhe liegen, sich aber zwischen den Messrohrpaaren unterscheiden.

Die Daten in Fign. 2 und 3 stammen von einem Experiment, bei dem Flüssigkeit aus den Messrohren des in Fig. 1 dargestellten Coriolis-Massedurchflussmessgeräts 200 durch eine langsam steigende Druckbeaufschlagung mit einem Gas quasi-stationär verdrängt wurde. Wenn ein Durchfluss unter realen Betriebsbedingungen zum Stillstand kommt, können die hier gezeigten Zusammenhänge von einem beliebigen Zeitpunkt dauerhaft vorkommen.

Fig. 2 zeigt, dass bei der Verdrängung von Flüssigkeit die Druckdifferenz zunächst ansteigt, ohne dass sich dies auf die Dichtemesswerte auswirkt. Dies liegt daran, dass eine Grenzfläche 234 zwischen Flüssigkeit 230 und Gas 240 anfangs noch nicht innere Koppler 214, 224 der Messrohrpaare des Coriolis-Massedurchflussmessgeräts 200 erreicht hat, welche die schwingenden, für die Messung wirksamen Abschnitte der Messrohre 210, 220 begrenzen. Wenn die Grenzfläche 234 jedoch die Koppler 214, 224 passiert hat wirkt sich die in den Messrohren 210, 220 fehlende Flüssigkeit 230 in Form einer scheinbar abnehmenden Dichte aus. Dieser Effekt ist im inneren bzw. oberen Messrohrpaar 210 ausgeprägter, da die relative Bedeutung der fehlenden Flüssigkeit größer ist, als bei dem äußeren bzw. unteren Messrohrpaar 220. Wenn daher im Messbetrieb abweichende Dichtemesswerte zwischen den Messrohrpaaren 210, 220 festgestellt werden, die nicht anders erklärbar, werden diese als Indiz für teilgefüllte Messrohre bei Stillstand gedeutet. Dementsprechend wird eine zugehörige Druckdifferenz nicht als durch einen Durchfluss verursacht interpretiert.

In Fig. 3 ist die Kurve der Druckdifferenz, gegen die Kurve für eine Differenz der Dämpfung der Messrohrschwingungen ausgetauscht. Es ist ersichtlich, dass bei komplett gefüllten Messrohren 210, 220 die Dämpfung der Messrohrschwingungen der unterschiedlichen Messrohrpaare praktisch gleich ist, die Differenz also vernachlässigbar ist. Mit zunehmender Verdrängung der Flüssigkeit 230 unterscheidet sich aber das Dämpfungsverhalten zwischen den Messrohrpaaren, da die relative Bedeutung der Lage der Grenzfläche für das innere Messrohrpaar 210 stärker ist.

Im Ergebnis kann also anhand der Dichteabweichungen und der Differenz zwischen den Dämpfungen der Messrohrschwingungen entschieden werden, ob eine Druckdifferenz zwischen den Messpunkten als durchflussbedingt oder als stillstandbedingt zu deuten ist.

Eine tatsächlich Dichtedifferenz kann auch dadurch auftreten, dass es in einer mit Gas beladenen Flüssigkeit zu einer Stratifizierung in der Rohrleitung kommt, wobei in dem Fall im oberen Messrohrpaar eine geringere Dichte zu erwarten ist. In diesem Fall sollte aber bei Durchfluss der Gasbeladung entsprechende Dichtefluktuation festgestellt werden können. Außerdem ist die Gasbeladung als solche mit der sogenannten Multifrequenztechnologie zu charakterisieren. Bei Fehlen dieser Indizien ist daher von Stillstand auszugehen.

Unter Anwendung der obigen Prinzipien, kann das erfindungsgemäße Verfahren im Ausführungsbeispiel gemäß Fig. 4 implementiert werden.

Das Verfahren 100 beginnt mit dem Erfassen 110 einer Druckdifferenz zwischen einem ersten Druckmesspunkt und einem zweiten Druckmesspunkt wobei zwischen den Druckmesspunkten ein Coriolis-Massedurchflussmessgerät gemäß Fig. 1 angeordnet ist. Es folgen das Erfassen eines ersten Dichtemesswerts 122 auf Basis mindestens einer ersten Schwingungsfrequenz des ersten Oszillators und das Erfassen eines zweiten Dichtemesswerts 124 auf Basis mindestens einer zweiten Schwingungsfrequenz des zweiten Oszillators. Anschließend folgt eine Prüfung 140, ob die Dichtedifferenz einen Dichtedifferenzgrenzwert unterschreitet. Falls dies der Fall ist, folgt das Ermitteln eines Durchflussmesswerts 150 auf Basis der Druckdifferenz. Hierbei kommt es vorzugsweise noch zu einer Überprüfung, ob die Druckdifferenz einen Schwellwert von beispielsweise 25 mbar überschreitet. Falls dies nicht der Fall kann der Druckdifferenz ein Durchfluss von Null zu geordnet werden.

## Patentansprüche

1. Verfahren (100) zum Überwachen eines Durchflusses eines Mediums, welches zumindest eine flüssige Phase aufweist, mittels eines Coriolis-Massedurchflussmessgeräts, und eines Differenzdruckmessgeräts welches dazu eingerichtet ist eine Druckdifferenz zwischen einem ersten Druckmesspunkt und einem zweiten Druckmesspunkt an einer Rohrleitung zu ermitteln, wobei das Coriolis-Massedurchflussmessgerät zwischen dem ersten Druckmesspunkt und dem zweiten Druckmesspunkt in der Rohrleitung angeordnet ist wobei das Coriolis-Massedurchflussmessgerät als Wirkdruckgeber dient, wobei der erste Druckmesspunkt zwischen einer Druckquelle und dem Coriolis-Massedurchflussmessgerät angeordnet ist, wobei der zweite Druckmesspunkt zwischen dem Coriolis-Massedurchflussmessgerät und einer Drucksenke angeordnet ist;
wobei das Coriolis-Massedurchflussmessgerät mindestens zwei Oszillatoren mit jeweils mindestens einem gebogenen Messrohr aufweist, wobei die gebogenen Messrohre jeweils einen Scheitelpunkt aufweisen, der bezogen auf ein lokales Schwerefeld am tiefsten Punkt des Messrohrs angeordnet ist, wobei die Messrohre der Oszillatoren zwischen zwei Sammlern angeordnet sind, durch welche die strömungstechnisch parallel geschaltet sind, wobei ein erster Scheitelpunkt eines Messrohrs eines ersten Oszillators oberhalb eines zweiten Scheitelpunkts eines Messrohrs eines zweiten Oszillators angeordnet ist,
wobei das Verfahren (100) die folgenden Schritte umfasst:
Erfassen (110) einer Druckdifferenz zwischen dem ersten Druckmesspunkt und dem zweiten Druckmesspunkt;
Erfassen eines ersten Dichtemesswerts (122) auf Basis mindestens einer ersten Schwingungsfrequenz des ersten Oszillators;
Erfassen eines zweiten Dichtemesswerts (124) auf Basis mindestens einer zweiten Schwingungsfrequenz des zweiten Oszillators;
Ermitteln eines Durchflussmesswerts (150) auf Basis der Druckdifferenz, wenn eine Differenz zwischen dem ersten Dichtemesswert und dem zweiten Dichtemesswert kleiner als ein Dichtedifferenzgrenzwert ist.

2. Verfahren nach Anspruch 1, wobei der Dichtedifferenzgrenzwert eine Funktion einer Dichte des Mediums ist.

3. Verfahren nach Anspruch 1 oder 2, wobei der Dichtedifferenzgrenzwert eine Funktion einer Gasbeladung des Mediums ist.

4. Verfahren nach Anspruch 3, wobei die Gasbeladung anhand von Dichtefluktuationen, und/oder der Dämpfung der Messrohrschwingungen bzw. der Fluktuation der Dämpfung detektiert wird.

5. Verfahren nach einem der vorhergehenden Ansprüche, wobei das erste Messrohr und das zweite Messrohr jeweils eine Messrohrmittenlinie aufweisen, wobei der Dichtedifferenzgrenzwert eine Funktion des vertikalen Abstands der Messrohrmittenlinien am Scheitelpunkt der Messrohre ist.

6. Verfahren nach einem der vorhergehenden Ansprüche, wobei das Ermitteln eines Durchflussmesswerts auf Basis der Druckdifferenz eine Überprüfung umfasst, ob die Druckdifferenz einen Schwellwert überschreitet, wobei unterhalb des Schwellwerts ein Durchfluss von Null angenommen wird.

7. Verfahren nach einem der vorhergehenden Ansprüche, wobei der Schwellwert nicht mehr als 30 mbar, insbesondere nicht mehr als 25 mbar beträgt.

8. Verfahren nach einem der vorhergehenden Ansprüche, wobei zwischen dem zweiten Druckmesspunkt und der Drucksenke ein Ventil angeordnet ist.

## Claims

1. Method (100) for monitoring a flow rate of a medium, which has at least one liquid phase, by means of a Coriolis mass flow meter, and a differential pressure meter which is set up to determine a pressure difference between a first pressure measuring point and a second pressure measuring point on a pipeline, wherein the Coriolis mass flow meter is arranged between the first pressure measuring point and the second pressure measuring point in the pipeline, wherein the Coriolis mass flow meter serves as a differential pressure transmitter, wherein the first pressure measuring point is arranged between a pressure source and the Coriolis mass flow meter, wherein the second pressure measuring point is arranged between the Coriolis mass flow meter and a pressure sink;
wherein the Coriolis mass flow meter has at least two oscillators each with at least one bent measuring tube, wherein the bent measuring tubes each have a vertex which is arranged at the lowest point of the measuring tube in relation to a local gravitational field, wherein the measuring tubes of the oscillators are arranged between two collectors, through which the measuring tubes are connected in parallel in terms of flow, wherein a first vertex of a measuring tube of a first oscillator is arranged above a second vertex of a measuring tube of a second oscillator,
wherein the method (100) comprises the following steps:
Detection (110) of a pressure difference between the first pressure measuring point and the second pressure measuring point;
Detecting a first density measurement value (122) based on at least a first oscillation frequency of the first oscillator;
detecting a second density measurement value (124) based on at least a second oscillation frequency of the second oscillator;
Determining a flow measurement value (150) based on the pressure difference when a difference between the first density measurement value and the second density measurement value is less than a density difference limit value.

2. The method according to claim 1, wherein the density difference threshold is a function of a density of the medium.

3. The method according to claim 1 or 2, wherein the density difference limit value is a function of a gas loading of the medium.

4. Method according to claim 3, wherein the gas loading is detected by means of density fluctuations and/or the damping of the measuring tube oscillations or the fluctuation of the damping.

5. The method according to any one of the preceding claims, wherein the first measuring tube and the second measuring tube each have a measuring tube centerline, wherein the density difference limit value is a function of the vertical distance between the measuring tube centerlines at the apex of the measuring tubes.

6. The method according to any one of the preceding claims, wherein determining a measured flow value based on the pressure difference comprises checking whether the pressure difference exceeds a threshold value, wherein a flow rate of zero is assumed below the threshold value.

7. Method according to one of the preceding claims, wherein the threshold value is not more than 30 mbar, in particular not more than 25 mbar.

8. Method according to one of the preceding claims, wherein a valve is arranged between the second pressure measuring point and the pressure sink.

## Revendications

1. Procédé (100) de surveillance d'un écoulement d'un milieu, qui présente au moins une phase liquide, au moyen d'un débitmètre massique de Coriolis, et d'un appareil de mesure de pression différentielle qui est conçu pour déterminer une différence de pression entre un premier point de mesure de pression et un deuxième point de mesure de pression sur une conduite, le débitmètre massique de Coriolis étant disposé entre le premier point de mesure de pression et le deuxième point de mesure de pression dans la conduite, le débitmètre massique de Coriolis servant de capteur de pression effective, le premier point de mesure de pression étant disposé entre une source de pression et le débitmètre massique de Coriolis, le deuxième point de mesure de pression étant disposé entre le débitmètre massique de Coriolis et un puits de pression ;
le débitmètre massique de Coriolis présentant au moins deux oscillateurs avec chacun au moins un tube de mesure coudé, les tubes de mesure coudés présentant chacun un sommet qui est disposé au point le plus bas du tube de mesure par rapport à un champ de gravité local, les tubes de mesure des oscillateurs étant disposés entre deux collecteurs par lesquels ils sont montés en parallèle du point de vue de l'écoulement, un premier sommet d'un tube de mesure d'un premier oscillateur étant disposé au-dessus d'un deuxième sommet d'un tube de mesure d'un deuxième oscillateur,
le procédé (100) comprenant les étapes suivantes :
détecter (110) une différence de pression entre le premier point de mesure de pression et le deuxième point de mesure de pression ;
l'acquisition d'une première mesure de densité (122) sur la base d'au moins une première fréquence d'oscillation du premier oscillateur ;
l'acquisition d'une deuxième valeur de mesure de densité (124) sur la base d'au moins une deuxième fréquence d'oscillation du deuxième oscillateur ;
déterminer une valeur de mesure de débit (150) sur la base de la différence de pression lorsqu'une différence entre la première valeur de mesure de densité et la seconde valeur de mesure de densité est inférieure à une valeur limite de différence de densité.

2. Procédé selon la revendication 1, dans lequel la valeur limite de différence de densité est une fonction d'une densité du milieu.

3. Procédé selon la revendication 1 ou 2, dans lequel la valeur limite de différence de densité est une fonction d'une charge de gaz du milieu.

4. Procédé selon la revendication 3, dans lequel la charge de gaz est détectée à l'aide des fluctuations de densité, et/ou de l'amortissement des oscillations du tube de mesure ou de la fluctuation de l'amortissement.

5. Procédé selon l'une quelconque des revendications précédentes, dans lequel le premier tube de mesure et le deuxième tube de mesure ont chacun une ligne médiane de tube de mesure, la valeur limite de différence de densité étant une fonction de la distance verticale des lignes médianes de tube de mesure au sommet des tubes de mesure.

6. Procédé selon l'une quelconque des revendications précédentes, dans lequel la détermination d'une valeur de mesure de débit sur la base de la différence de pression comprend une vérification du fait que la différence de pression dépasse une valeur de seuil, un débit nul étant supposé être inférieur à la valeur de seuil.

7. Procédé selon l'une quelconque des revendications précédentes, dans lequel la valeur seuil n'est pas supérieure à 30 mbar, en particulier n'est pas supérieure à 25 mbar.

8. Procédé selon l'une quelconque des revendications précédentes, dans lequel une vanne est disposée entre le deuxième point de mesure de pression et le puits de pression.
